# EUROPÄISCHE PATENTSCHRIFT

(11) **EP 1 191 318 B1**
(45) Veröffentlichungstag und Bekanntmachung des Hinweises auf die Patenterteilung: **12.11.2003**
(21) Anmeldenummer: 01121389.9
(22) Anmeldetag: 06.09.2001
(51) Int. Cl.: G01L 3/04, G01L 3/10, B62D 5/04

(54) **Einrichtung zur Lenkhilfe**
Device for power-assisted steering
Dispositif pour direction assistée

(30) Priorität: 14.09.2000 DE 10045351
(43) Veröffentlichungstag der Anmeldung: 27.03.2002
(73) Patentinhaber: SIEMENS AKTIENGESELLSCHAFT, 80333 München (DE)
(72) Erfinder: Schäfert, Arthur, 65843 Sulzbach (DE); Scharf, Gerald, 65795 Hattersheim (DE)

(56) Entgegenhaltungen:
- EP-A- 0 053 357
- EP-A- 0 570 066
- US-A- 4 655 092
- US-A- 4 800 764

## Beschreibung

Die Erfindung betrifft eine Einrichtung zur Lenkhilfe, wobei zwischen einer das Lenkrad tragenden ersten Welle und einer mit dem Getriebe der Lenkhilfe verbundenen zweiten Welle eine Drehmomentsensor-Welle vorgesehen ist.

In Kraftfahrzeugen werden in zunehmendem Maße elektrische Lenkhilfen eingesetzt. Diese umfassen eine Stellvorrichtung (Elektromotor), eine elektronische Steuereinheit und einen Drehmomentsensor. Mittels des Drehmomentsensors wird das Drehmoment gemessen, das der Fahrer über das Lenkrad auf die Lenkwelle ausübt. Die drehmomentabhängige Verformung der Drehmomentsensor-Welle wird mit einem geeigneten Sensor gemessen und in ein Signal umgewandelt, das die elektronische Steuereinheit auswertet und den Elektromotor entsprechend steuert. Eine solche Drehmomentsensor-Welle ist beispielsweise in EP 0 570 066 A1 beschrieben. Bei der Integration des Drehmomentsensors in die Lenkwelle können die im Folgenden aufgeführten Probleme auftreten.

Durch die zusätzliche Lagerung der Lenkwelle an den Enden der Drehmomentsensor-Welle kann es bei stets vorhandenen Toleranzen und Rundlauffehlern zu Verspannungen und ungewollten Biegemomenten kommen.

Aus US 4,800,764 ist eine Anordnung bekannt geworden, bei dem eine Drehmomentsensor-Welle zwischen zwei Wellen verdrehfest gelagert ist. Eine verdrehfeste Lagerung eines flachen Drehmoment-Sensorelementes ist in US 4,655,092 beschrieben, wobei zwischen der einen Welle und dem Drehmoment-Sensorelement ein Gummikörper derart ausgebildet ist, dass eine spielfreie Verbindung entsteht. Ferner ist durch EP 0 053 357 A1 ein Drehmoment-Messgerät bekannt geworden, bei welchem ein Anschluss von Wellensträngen mit Hilfe von elastischen, jedoch drehsteifen Kupplungen vorgesehen ist. Diese sind in axialer Richtung nachgiebig und können auch Fluchtfehler ausgleichen.

Ein weiteres Problem kann beim Schutz des Drehmomentsensors durch einen mechanischen Überlastanschlag auftreten, da bei Drehmomentsensoren mit hoher Steifigkeit für den Überlastanschlag hohe Fertigungsgenauigkeiten nötig sind und bereits kleine Winkelfehler hohe Variationen im Anschlagmoment bewirken. Mit den bekannten Vorrichtungen sind diese Probleme jedoch nicht zu lösen.

Ein anderer nachteiliger Effekt ist die Übertragung von Schwingungen aus dem Motorraum direkt auf das Lenkrad durch die Lenkwelle.

Der Erfindung liegt daher die Aufgabe zugrunde, mit einfachen und preiswerten Mitteln diese Probleme zu beheben.

Diese Aufgabe wird erfindungsgemäß dadurch gelöst, dass bei einer Einrichtung zur Lenkhilfe der eingangs genannten Art mindestens ein Ende der Drehmomentsensor-Welle mindestens dreh-elastisch durch Dämpfungselemente in der ersten oder zweiten Welle gelagert ist. Dadurch können Verspannungen und das Entstehen von Biegemomenten in der Lenkwelle verringert bzw. vermieden werden.

Eine vorteilhafte Ausgestaltung der erfindungsgemäßen Einrichtung zur Lenkhilfe besteht darin, dass die Lagerung durch Gummielemente erfolgt. Dieses Material eignet sich gut zur elastischen Lagerung und ist kostengünstig erhältlich. Dabei sind Dämpfungselemente aus Kautschuk und aus Kunststoffen, insbesondere Elastomeren, geeignet.

Weiterhin wird mittels der Gummielemente das Lenkrad von Schwingungen aus dem Motorraum entkoppelt, da die direkte metallische Verbindung unterbrochen wird und die elastische Verbindung über die Gummielemente Vibrationen filtert und reduziert. Hierdurch wird der Komfort für den Fahrer verbessert.

Eine weitere Ausgestaltung der erfindungsgemäßen Einrichtung zur Lenkhilfe sieht vor, dass beide Enden mindestens dreh-elastisch durch Dämpfungselemente gelagert sind. Dadurch wird der Effekt der Vermeidung und Verringerung von Vibrationen auf das Lenkrad verstärkt und das Entstehen von Verspannungen und Momenten in der Lenksäule weiter reduziert. Außerdem wird mit zwei elastischen Gummielementen an beiden Enden der steifen Sensorwelle ein Doppelkardangelenk gebildet, das kostengünstig in großer Stückzahl gefertigt werden kann.

Durch die Erfindung erhöht sich die zulässige Toleranz für die Fertigung der Überlastkupplung, da die Steifigkeit verringert und der Drehwinkel pro Drehmoment erhöht wird. Hierdurch ist die Überlastsicherung kostengünstiger zu fertigen, da der Winkelfehler keine so hohe Änderung des Anschlagsmoments zur Folge hat. Ferner sind die Gummielemente ebenfalls gegen Überlast gesichert.

Ein vorteilhafter Überlastanschlag wird bei der erfindungsgemäßen Einrichtung dadurch gebildet, dass die erste und die zweite Welle im Bereich der Drehmomentsensor-Welle als Hohlwellen ausgebildet sind, dass am Grund des jeweiligen Hohlraums je ein ringförmiges Gummielement angeordnet ist und dass die sich gegenüberstehenden Enden der Hohlwellen als Klauenkupplung mit einem gegebenen Spiel zur Überlastsicherung ausgebildet sind.

Bei einer weiteren vorteilhaften Ausgestaltung der Erfindung ist vorgesehen, daß die Dämpfungselemente eine derartige Steifigkeit aufweisen, daß die Charakteristik des die Lenkhilfe, die Wellen und das Lenkrad umfassenden Regelkreises keine Resonanzstelle aufweist.

Die Erfindung läßt zahlreiche Ausführungsformen zu. Zwei davon sind schematisch in mehreren Zeichnungen anhand mehrerer Figuren dargestellt und nachfolgend beschrieben. Es zeigt:
Fig. 1 ein Ausführungsbeispiel der erfindungsgemäßen Einrichtung zur Lenkhilfe,
Fig. 2 ein Ausführungsbeispiel der erfindungsgemäße Ausbildung der Einrichtung zur Lenkhilfe mit einer Überlastsicherung,
Fig. 3 die Auswirkung der erfindungsgemäßen Einrichtung zur Lenkhilfe auf die Regelstreckencharakteristik und
Fig. 4 eine schematische Darstellung eines Lenksystems eines Kraftfahrzeugs mit einer elektrischen Servolenkung.

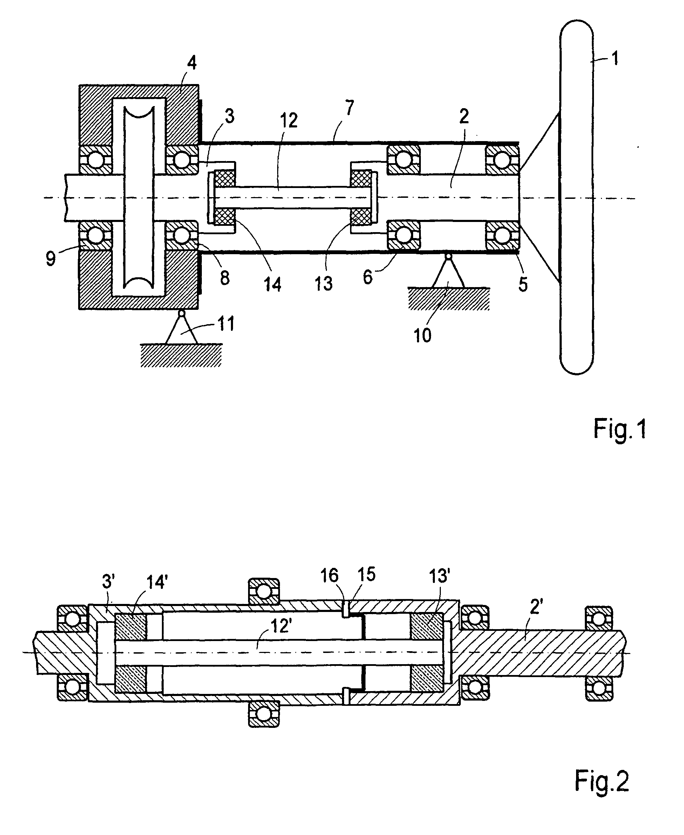

Fig. 1 zeigt ein Ausführungsbeispiel der erfindungsgemäßen Einrichtung zur Lenkhilfe. Die Lenkwelle besteht aus einer das Lenkrad 1 tragenden ersten Welle 2 - im folgenden auch Lenkradwelle genannt - und einer am Schneckengetriebe 4 angeordneten zweiten Welle 3 - im folgenden auch Lenkgetriebewelle genannt. Die Lenkradwelle 2 ist mit Hilfe von zwei Kugellagern 5 und 6 in einer Lenksäule 7 gelagert, während die Lenkgetriebewelle 3 im Getriebe in Kugellagern 8, 9 gehalten wird. Zwischen den beiden Wellen 2, 3 befindet sich die Drehmomentsensor-welle 12, die an beiden Enden mit Gummielementen 13, 14 in der Lenkradwelle 2 und in der Lenkgetriebewelle 3 gelagert ist. Die Befestigung der Einrichtung im Kraftfahrzeug ist durch zwei Lagerpunkte 10 und 11 angedeutet.

Fig. 2 zeigt ein erfindungsgemäßes Ausführungsbeispiel mit einer Überlastsicherung. An beiden Enden der Drehmomentsensor-Welle 12' befinden sich wie bei Fig. 1 Gummielemente 13', 14'. Die Lenkradwelle 2' und die Lenkgetriebewelle 3' sind teilweise als Hohlwellen ausgebildet. Die beiden sich gegenüberstehenden Enden 15, 16 der Hohlwellen bilden eine Klauenkupplung, die mit einem gegebenen Spiel als Überlastsicherung dient. Auch bei dem Ausführungsbeispiel nach Fig. 2 sind die Wellen in Kugellagern 5', 6', 8', 9' gehalten.

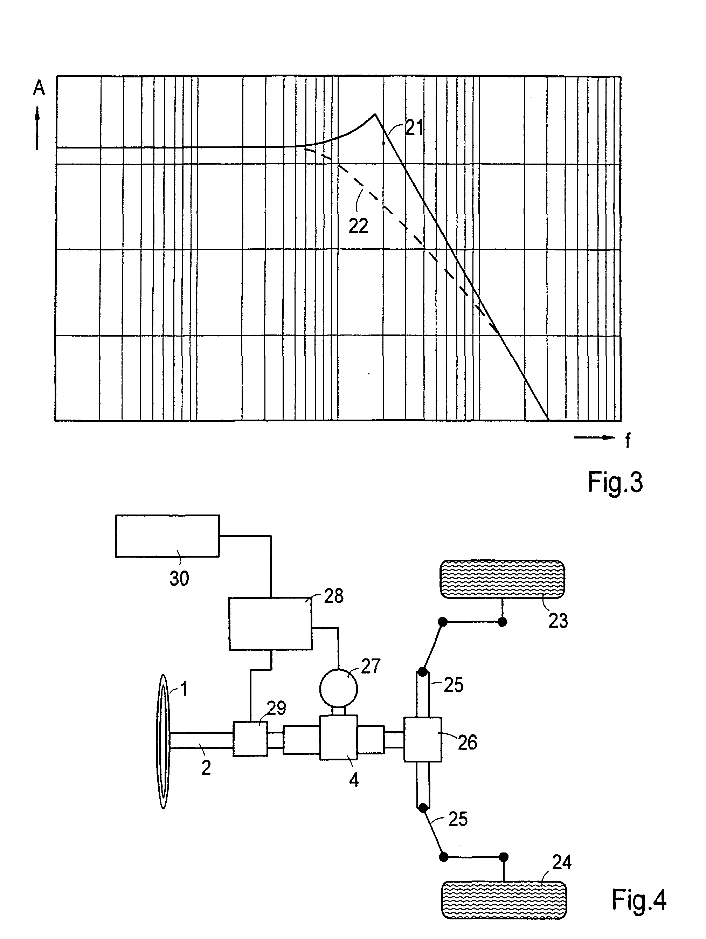

Fig. 3 zeigt die Auswirkung der erfindungsgemäßen Einrichtung zur Lenkhilfe auf die Regelstreckencharakteristik, wobei die Amplitude über der Frequenz aufgetragen ist. Die Kurve 21 zeigt den Verlauf ohne den erfindungsgemäßen Einsatz der Gummielemente mit einer Resonanzstelle wegen der geringen Dämpfung. Die Kurve 22 stellt den Verlauf bei der erfindungsgemäßen Einrichtung dar. Durch die gute Dämpfung der Regelstrecke weist die Kurve 22 keine Resonanzstelle auf.

Fig. 4 stellt schematisch die Lenkeinrichtung eines Kraftfahrzeugs dar mit Vorderrädern 23, 24, einem Lenkgestänge 25, einem Lenkgetriebe 26, das außer dem eigentlichen Lenkgetriebe 26 ein Schneckengetriebe 4 umfasst, einer Lenkwelle 2 und einem Lenkrad 1. Als Servo-Lenkung bzw. Lenkhilfe ist ein Elektromotor 27 vorgesehen, dessen Abtrieb über ein Schneckengetriebe 4 mit der Lenkwelle 2 verbunden ist und der von einer Steuerschaltung 28 und einem Drehmomentsensor 29 derart gesteuert wird, dass er den mit Hilfe des Lenkrades 1 gemachten Vorgaben möglichst genau folgt. Zusätzlich erhält die Steuerschaltung 28 vom Bordnetz 30 Signale, die den Betriebszustand des Kraftfahrzeugs beschreiben, soweit er für die Servo-Lenkung relevant ist.

## Patentansprüche

1. Einrichtung zur Lenkhilfe, wobei zwischen einer das Lenkrad tragenden ersten Welle und einer mit dem Getriebe der Lenkhilfe verbundenen zweiten Welle eine Drehmomentsensor-Welle vorgesehen ist, **dadurch gekennzeichnet, dass** mindestens ein Ende der Drehmomentsensor-Welle (12, 12') mindestens dreh-elastisch durch Dämpfungselemente (13, 13', 14, 14') in der ersten oder zweiten Welle gelagert ist.

2. Einrichtung nach Anspruch 1, **dadurch gekennzeichnet, dass** die Lagerung durch Gummielemente (13, 13', 14, 14') erfolgt.

3. Einrichtung nach einem der Ansprüche 1 oder 2, **dadurch gekennzeichnet, dass** beide Enden mindestens dreh-elastisch durch Dämpfungselemente (13, 13', 14, 14') gelagert sind.

4. Einrichtung nach Anspruch 3, **dadurch gekennzeichnet, dass** die erste (2') und die zweite Welle (3') im Bereich der Drehmomentsensor-Welle (12') als Hohlwellen ausgebildet sind, dass am Grund des jeweiligen Hohlraums je ein ringförmiges Gummielement (13', 14') angeordnet ist und dass die sich gegenüberstehenden Enden (15, 16) der Hohlwellen als Klauenkupplung mit einem gegebenen Spiel zur Überlastsicherung ausgebildet sind.

5. Einrichtung nach einem der vorhergehenden Ansprüche, **dadurch gekennzeichnet, dass** die Dämpfungselemente (13, 13', 14, 14') eine derartige Steifigkeit aufweisen, dass die Charakteristik des die Lenkhilfe (4, 27, 28), die Wellen (2, 3, 2', 3') und das Lenkrad (1) umfassenden Regelkreises keine Resonanzstelle aufweist.

## Claims

1. Steering booster device, a torque-sensor shaft being provided between a first shaft carrying the steering wheel and a second shaft connected to the gear of the steering booster, **characterized in that** at least one end of the torque-sensor shaft (12, 12') is supported at least in a rotationally flexible fashion in the first or second shaft by damping elements (13, 13', 14, 14').

2. Device according to Claim 1, **characterized in that** the support is provided by rubber elements (13, 13', 14, 14').

3. Device according to either of Claims 1 or 2, **characterized in that** both ends are supported at least in a rotationally flexible fashion by damping elements (13, 13', 14, 14').

4. Device according to Claim 3, **characterized in that** the first (2') and the second shaft (3') are designed as hollow shafts in the region of the torque-sensor shaft (12'), **in that** an annular rubber element (13', 14') is arranged at the base of each cavity, and **in that** the facing ends (15, 16) of the hollow shafts are designed as a dog clutch with a given play for overload prevention.

5. Device according to one of the preceding claims, **characterized in that** the stiffness of the damping elements (13, 13', 14, 14') is such that the characteristic of the control loop incorporating the steering booster (4, 27, 28), the shafts (2, 3, 2', 3') and the steering wheel (1) has no point of resonance.

## Revendications

1. Dispositif pour direction assistée, un arbre de capteur de couple étant prévu entre le premier arbre portant le volant et un second arbre relié au mécanisme de la direction assistée, **caractérisé en ce que** au moins une extrémité de l'arbre de capteur de couple (12, 12') soit logée dans un palier au moins de manière élastique en rotation dans le premier ou le second arbre au moyen d'éléments amortisseurs (13, 13', 14, 14').

2. Dispositif selon la revendication 1, **caractérisé en ce que** le palier est réalisé par des éléments en caoutchouc (13, 13', 14, 14').

3. Dispositif selon l'une des revendications 1 ou 2, **caractérisé en ce que** les deux extrémités sont montées sur paliers au moins de manière élastique en rotation par des éléments amortisseurs (13, 13', 14, 14').

4. Dispositif selon la revendication 3, **caractérisé en ce que** le premier (2') et le second arbre (3') sont conçus comme des arbres creux dans la zone de l'arbre du capteur de couple (12'), **en ce que** un élément en caoutchouc (13', 14') de forme annulaire est disposé au fond de chaque cavité et **en ce que** les extrémités (15, 16) des arbres creux se trouvant face à face sont réalisées comme accouplement à griffes avec un jeu donné pour la protection contre les surcharges.

5. Dispositif selon l'une des revendications précédentes, **caractérisé en ce que** les éléments amortisseurs (13, 13', 14, 14') présentent une rigidité telle que la caractéristique de la boucle de régulation, comprenant la direction assistée (4, 27, 28), les arbres (2, 3, 2', 3') et le volant (1), ne présente aucun point de résonance.
